# EUROPEAN PATENT APPLICATION

(11) **EP 4 601 151 A1**
(43) Date of publication of application: **13.08.2025**
(21) Application number: 24799472.6
(22) Date of filing: 23.07.2024
(51) Int. Cl.: H02J 7/00, H02J 7/34, H01M 10/44

(54) **ENERGY STORAGE DEVICE CHARGING CONTROL METHOD AND RELATED APPARATUS**

(30) Priority: 20.12.2023 CN 202311753141
(71) Applicant: Shenzhen Ampere Time Digital Energy Technology Co., Ltd., Shenzhen, Guangdong 518100 (CN)
(72) Inventor: LU, Haijun, Shenzhen, Guangdong 518100 (CN); WANG, Jianchun, Shenzhen, Guangdong 518100 (CN); FU, Site, Shenzhen, Guangdong 518100 (CN); ZHAO, Menglong, Shenzhen, Guangdong 518100 (CN)
(74) Representative: Ipside
(86) International application number: PCT/CN2024/107028
(87) International publication number: WO 2025/130022

(57) **Abstract**

The disclosure provides a charging control method for an energy storage device and a related apparatus, and the method includes the following. A corresponding first usage device is determined based on a destination of a current trip in trip information, and a predicted power consumption amount of the first usage device is determined based on weather information of the trip information. A first charging amount of a first energy storage battery corresponding to the first usage device is determined based on the trip information and the predicted power consumption amount of the first usage device. Finally, a vehicle-mounted charger is controlled to charge the first energy storage battery based on the first charging amount of the first energy storage battery. **In** this way, the allocation efficiency of the energy storage capacity of the control system is improved.

## Description

### CROSS-REFERENCE

This application claims priority to Chinese Patent Application No. 2023117531416, filed December 20, 2023, and entitled "CHARGING CONTROL METHOD FOR ENERGY STORAGE DEVICE AND RELATED APPARATUS", the entire disclosure of which is incorporated herein by reference.

### TECHNICAL FIELD

The present disclosure relates to the field of control technology, and in particular, to a charging control method for an energy storage device and a related apparatus.

### BACKGROUND

At present, when it comes to going on a trip, a recreational vehicle (RV) among various types of automobile products brings a better experience to users. Multiple usage devices for the trip may be arranged in the RV, such as a camping device, a fishing device, etc., and each usage device is equipped with a portable energy storage device for power supply. Generally, this kind of energy storage device is charged by a corresponding vehicle-mounted charger arranged by a RV control system, which is a manual charging method. However, with the manual charging method, a required charging amount corresponding to each energy storage device is unable to be determined, and the energy storage device with the most urgent charging demand among multiple energy storage devices is unable to be determined. Therefore, those energy storage devices with urgent charging demand may not be fully charged, resulting in that the usage devices for the trip are unable to work normally, and the users may have poor experience during the trip. Meanwhile, in a case where the energy storage capacity of the RV control system is limited, failing to determine the required charging amount of each energy storage device may lead to a low allocation efficiency of the energy storage capacity of the RV control system, thereby resulting in power resources of the RV control system not being fully utilized.

### SUMMARY

The disclosure provides a charging control method for an energy storage device and a related apparatus. A charging amount of an energy storage battery corresponding to a usage device in a recreational vehicle (RV) is determined based on trip information, and accordingly a vehicle-mounted charger is controlled to charge the energy storage battery, thereby intelligently determining the allocation of the capacity of the energy storage battery in the RV, improving the allocation efficiency of the energy storage capacity of the control system, and improving the energy utilization rate of the energy storage capacity.

In a first aspect, the disclosure provides a charging control method for an energy storage device. The method is applicable to a controller in a RV control system, and the RV control system further includes a vehicle-mounted charger and at least one energy storage battery. The method includes the following. Trip information is obtained, where the trip information includes a destination and weather information of a current trip. A first usage device corresponding to the destination of the current trip is determined. A predicted power consumption amount of the first usage device is determined based on the weather information. Based on the trip information and the predicted power consumption amount of the first usage device, a first charging amount of a first energy storage battery corresponding to the first usage device is determined, where the first energy storage battery is an energy storage battery in the at least one energy storage battery. Based on the first charging amount corresponding to the first energy storage battery, the vehicle-mounted charger is controlled to charge the first energy storage battery.

It may be seen that, in the disclosure, a corresponding first usage device is determined based on the destination of the current trip in the trip information. The first charging amount of the first energy storage battery corresponding to the first usage device is determined based on the trip information, so that the first energy storage battery is charged by the vehicle-mounted charger. In this way, a required charging amount corresponding to a device that may be used in the RV may be determined through the trip information, and an energy storage battery corresponding to the device that may be used in the RV is automatically charged with the required charging amount. This not only ensures that the use of the first usage device by the user will not be affected by insufficient battery level, but also improves the allocation efficiency of the energy storage capacity of the control system, thereby improving the energy utilization rate of the energy storage capacity and making the control system more intelligent in charging the energy storage battery.

In a possible embodiment, the method further includes the following. At least one application scenario corresponding to the destination of the current trip is determined. At least one second application scenario corresponding to the first usage device is determined from the at least one application scenario. Scenario weather information corresponding to the at least one second application scenario is determined from the weather information. The predicted power consumption amount of the first usage device is determined based on the weather information as follows. The predicted power consumption amount of the first usage device is determined based on the scenario weather information corresponding to the at least one second application scenario.

In the disclosure, the scenario weather information corresponding to the at least one second application scenario is determined based on the at least one second application scenario corresponding to the first usage device in the RV, so that the predicted power consumption amount of the first usage device is determined. In this way, the weather information may be closely correlated with the current trip, thereby improving the accuracy of determining the predicted power consumption amount of the first usage device.

In a possible embodiment, the trip information further includes an arrival time corresponding to the destination of the current trip, and the method further includes the following. A usage duration of the first usage device is determined based on the arrival time. The predicted power consumption amount of the first usage device is determined based on the scenario weather information corresponding to the at least one second application scenario as follows. A unit power consumption amount of the first usage device is determined based on the scenario weather information. If there is a single first usage device, the predicted power consumption amount of the first usage device is determined based on the usage duration and the unit power consumption amount.

In the disclosure, the usage duration of the first usage device is determined based on the arrival time, and the unit power consumption amount of the first usage device is determined based on the scenario weather information, so that the predicted power consumption amount of the first usage device is determined. In this way, the efficiency of determining the predicted power consumption amount of the first usage device is improved, and the accuracy of determining the predicted power consumption amount of the first usage device is also improved.

In a possible embodiment, the method further includes the following. If there are multiple first usage devices, a second application scenario corresponding to each of the multiple first usage devices is determined. If the multiple first usage devices correspond to multiple second application scenarios and the multiple first usage devices does not include any second usage device corresponding to multiple second application scenarios, a unit power consumption amount of each of the multiple first usage devices is determined based on the scenario weather information. If the multiple first usage devices correspond to multiple second application scenarios and the multiple first usage devices include a second usage device corresponding to multiple second application scenarios, the unit power consumption amount of each of the multiple first usage devices is determined based on the scenario weather information, where a unit power consumption amount of the second usage device includes multiple first unit power consumption amounts, and the multiple first unit power consumption amounts correspond to the multiple second application scenarios. A predicted power consumption amount of each first usage device is determined based on the unit power consumption amount and a usage duration of each first usage device.

In the disclosure, when there are multiple first usage devices and the multiple first usage devices include the second usage device corresponding to the multiple second application scenarios, a predicted power consumption amount of the second usage device corresponding to each second application scenario is determined. In this way, insufficient battery level of the energy storage battery corresponding to the second usage device caused by using the second usage device for multiple times during the trip may be avoided, thereby improving the accuracy of determining the predicted power consumption amount of the second usage device.

In a possible embodiment, the trip information further includes a trip duration of the current trip. Based on the predicted power consumption amount of the first usage device, the first charging amount of the first energy storage battery corresponding to the first usage device is determined as follows. A second charging amount of the first energy storage battery is determined based on the trip duration, a charging power of the vehicle-mounted charger, and a first battery level of the first energy storage battery, where the first battery level includes a remaining battery level and a battery capacity. If a second battery level is determined to be no less than the predicted power consumption amount of the first usage device, the second charging amount is determined as the first charging amount, where the second battery level is a sum of the second charging amount and the remaining battery level of the first energy storage battery. If the second battery level is determined to be less than the predicted power consumption amount of the first usage device, whether a second energy storage battery exists in other energy storage batteries is determined. The other energy storage batteries are energy storage batteries other than the first energy storage battery in the at least one energy storage battery. A third battery level of the second energy storage battery is no less than the predicted energy consumption amount of the first usage device. The third battery level is a sum of a third charging amount and a remaining battery level of the second energy storage battery, and the third charging amount is determined based on the trip duration, the charging power of the vehicle-mounted charger, and the first battery level of the second energy storage battery. If there is the second energy storage battery in the other energy storage batteries, the second energy storage battery is determined as a new first energy storage battery, and the third charging amount is determined as a first charging amount of the new first energy storage battery. If there is no second energy storage battery in the other energy storage batteries, a third energy storage battery in the other energy storage batteries in combination with the first energy storage battery is determined as a new first energy storage battery, to make a second battery level of the new first energy storage battery no less than the predicted power consumption amount of the first usage device, and a second charging amount of the new first energy storage battery is determined as a first charging amount of the new first energy storage battery.

In the disclosure, the first charging amount of the first energy storage battery is determined based on a chargeable capacity of the first energy storage battery and the predicted power consumption amount of the first usage device. In this way, a situation where the first energy storage device is unable to meet the power demand of the first usage device due to charging issues may be avoided.

In a possible embodiment, the second charging amount of the first energy storage battery is determined based on the trip duration, the charging power of the vehicle-mounted charger, and the first battery level of the first energy storage battery as follows. A fourth charging amount of the first energy storage battery is determined based on the trip duration and the charging power of the vehicle-mounted charger. If the fourth charging amount is determined to be greater than a first difference, the first difference is determined as the second charging amount, where the first difference is a difference between the battery capacity and the remaining battery level of the first energy storage battery. If the fourth charging amount is determined to be not greater than the first difference, the fourth charging amount is determined as the second charging amount.

In the disclosure, the second charging amount is determined by comparing the fourth charging amount and the first difference, thereby improving the accuracy of determining the second charging amount.

In a possible embodiment, based on the first charging amount corresponding to the first energy storage battery, the vehicle-mounted charger is controlled to charge the first energy storage battery as follows. If there are multiple destinations, the vehicle-mounted charger is controlled to charge a fourth energy storage battery based on a first charging amount corresponding to the fourth energy storage battery, where the fourth energy storage battery corresponds to a first destination. When the charging of the fourth energy storage battery is completed, the vehicle-mounted charger is controlled to charge a fifth energy storage battery based on a first charging amount corresponding to the fifth energy storage battery, where the fifth energy storage battery corresponds to a second destination. An arrival time corresponding to the first destination is earlier than an arrival time corresponding to the second destination, and the fourth energy storage battery and the fifth energy storage battery constitute the first energy storage battery.

In the disclosure, in a case where there are multiple destinations, priority of charging will be given to an energy storage device used at a destination corresponding to an earlier arrival time, which ensures that the energy storage battery that is firstly used meets the power supply demand, thereby improving the overall charging efficiency of the energy storage batteries.

In a second aspect, the disclosure provides a charging control apparatus for an energy storage device. The apparatus is applicable to a controller in a RV control system. The RV control system further includes a vehicle-mounted charger and at least one energy storage battery. The apparatus includes an obtaining unit, a determining unit, and a control unit. The obtaining unit is configured to obtain trip information, where the trip information includes a destination and weather information of a current trip. The determining unit is configured to determine a first usage device corresponding to the destination of the current trip. The determining unit is further configured to determine a predicted power consumption amount of the first usage device based on the weather information. The determining unit is further configured to determine, based on the trip information and the predicted power consumption amount of the first usage device, a first charging amount of a first energy storage battery corresponding to the first usage device, where the first energy storage battery is an energy storage battery in the at least one energy storage battery. The control unit is configured to control, based on the first charging amount corresponding to the first energy storage battery, the vehicle-mounted charger to charge the first energy storage battery.

In a third aspect, the disclosure provides an electronic device. The electronic device includes a processor, a memory, and a communication interface, where the processor, the memory, and the communication interface are connected to one another to perform communication between one another. The memory is configured to store executable program codes, and the communication interface is configured for wireless communication. The processor is configured to invoke the executable program codes stored in the memory to execute all or part of the operations described in any method of the first aspect.

In a fourth aspect, the disclosure provides a computer-readable storage medium. The computer-readable storage medium stores electronic data. The electronic data, when executed, is configured to be executed to realize all or part of the operations described in the first aspect of the disclosure.

In a fifth aspect, the disclosure provides a computer program product. The computer program product includes a non-transitory computer-readable storage medium storing a computer program which, when executed, causes a computer to execute all or part of the operations described in the first aspect of the disclosure. The computer program product may be a software installation package.

### BRIEF DESCRIPTION OF THE DRAWINGS

In order to describe technical solutions of embodiments of the disclosure more clearly, the following will give a brief introduction to the accompanying drawings used for describing the embodiments. Apparently, the accompanying drawings hereinafter described are some embodiments of the present disclosure. Based on these drawings, those of ordinary skill in the art can also obtain other drawings without creative effort.
FIG. 1 is a schematic structural view of a recreational vehicle control system provided in an embodiment of the disclosure.
FIG. 2 is a schematic flow chart of a charging control method for an energy storage device provided in an embodiment of the disclosure.
FIG. 3 is a schematic structural view of an energy storage battery provided in an embodiment of the disclosure.
FIG. 4 is a schematic structural view of a trip route provided in an embodiment of the disclosure.
FIG. 5 is a block diagram of functional units of a charging control apparatus for an energy storage device provided in an embodiment of the disclosure.
FIG. 6 is a block diagram of functional units of a charging control application apparatus for an energy storage device provided in an embodiment of the disclosure.
FIG. 7 is a block diagram of an electronic apparatus provided in an embodiment of the disclosure.

### DETAILED DESCRIPTION

In order to enable those skilled in the art to better understand the solutions of the disclosure, the following will clearly and completely illustrate technical solutions of embodiments of the disclosure with reference to the accompanying drawings of embodiments of the disclosure. Apparently, embodiments described herein are merely some embodiments, rather than all embodiments, of the disclosure. Based on the embodiments of the disclosure, all other embodiments obtained by those of ordinary skill in the art without creative effort shall fall within the protection scope of the disclosure.

The terms "first", "second", and the like in the description, claims of the present disclosure, and the above accompanying drawings are used for distinguishing different objects, rather than for describing a specific order. In addition, the terms "include", "have", and any variations thereof are intended to cover non-exclusive inclusions. For example, a process, method, system, product, or apparatus that includes a series of steps or units is not limited to the listed steps or units, but optionally further includes steps or units not listed, or optionally further includes other steps or units inherent to the process, method, product, or apparatus.

Reference to "embodiment" herein means that a particular feature, structure, or characteristic described in conjunction with the embodiment may be included in at least one embodiment of the present disclosure. The presence of the term at each place in the specification does not necessarily refer to the same embodiment, nor does it refer to a separate or alternative embodiment that is mutually exclusive of other embodiments. It may be understood by those skilled in the art, both explicitly and implicitly, that the embodiments described herein may be combined with other embodiments.

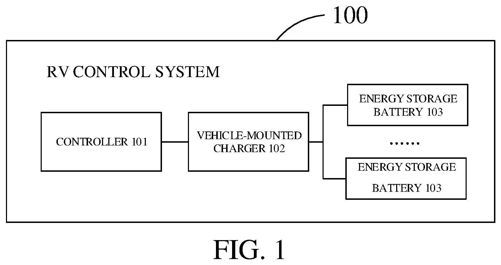

Reference is made to FIG. 1, which is a schematic structural view of a recreational vehicle (RV) control system provided in an embodiment of the disclosure. As illustrated in FIG. 1, an RV control system 100 includes a controller 101, a vehicle-mounted charger 102, and multiple energy storage batteries 103.

The controller 101 is configured to control the vehicle-mounted charger 102 to charge the multiple energy storage batteries 103.

The vehicle-mounted charger 102 is configured to charge the multiple energy storage batteries 103 through a storage battery of the RV.

The energy storage battery 103 is configured to supply power for a usage device of a target object. For example, the usage device may be a light, a trolling motor, etc. There may be multiple energy storage batteries 103, and each energy storage battery 103 may have different configuration and may be applied in different application scenarios. For example, a first energy storage battery may supply power for the light, and a second energy storage battery may supply power for the trolling motor. Each energy storage battery 103 may be installed with a battery management system (BMS) may be installed in, and may also include a wired/wireless communication interface, which is convenient for the controller 101 or a terminal device of the target object to obtain information such as battery level of each energy storage battery 103.

The controller 101 obtains trip information of the target object, where the trip information includes a destination and weather information of a current trip. The controller 101 determines, based on the destination of the current trip, a first usage device corresponding to the destination from multiple usage devices of the target object. The controller 101 determines a predicted power consumption amount of the first usage device based on the weather information. The controller 101 determines a first charging amount of the energy storage battery 103 corresponding to the first usage device based on the trip information and the predicted power consumption amount of the first usage device. The controller 101 controls the vehicle-mounted charger 102 to charge the energy storage battery 103 based on the first charging amount corresponding to the energy storage battery 103. In this way, a required charging amount corresponding to a device that may be used in the RV may be determined through the trip information, and an energy storage battery corresponding to the device that may be used in the RV is automatically charged with the required charging amount. This not only ensures that the use of the first usage device by the user will not be affected by insufficient battery level, but also improves the allocation efficiency of the energy storage capacity of the control system, thereby improving the energy utilization rate of the energy storage capacity and making the control system more intelligent in charging the energy storage battery.

Based on this, embodiments of the disclosure provide a charging control method for an energy storage device, and the embodiments of the disclosure will be described in detail in the following in combination with the accompanying drawings.

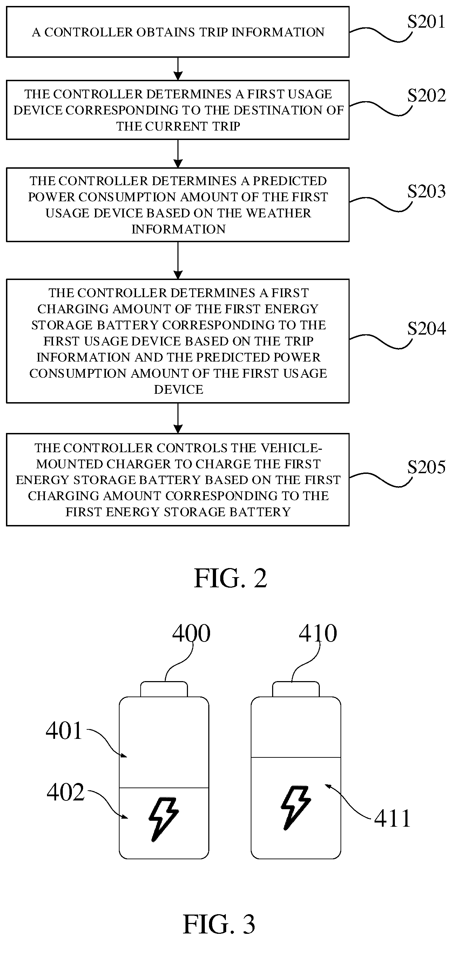

Reference is made to FIG. 2, which is a schematic flow chart of a charging control method for an energy storage device provided in an embodiment of the disclosure. The method is applicable to the above RV control system. As illustrated in FIG. 2, the method includes the following operations.

At S201, a controller obtains trip information.

The trip information includes a destination and weather information of a current trip. The trip information may be obtained by the controller when the target object is navigating on a corresponding navigation device of the RV, or may be obtained by the controller when the target object is navigating on a terminal device. The weather information may include environmental temperature, wind speed, wind direction, rainfall, etc.

At S202, the controller determines a first usage device corresponding to the destination of the current trip.

The firs usage device is one of the multiple usage devices equipped in the RV by the target object. The first usage device corresponding to the destination of the current trip may be determined based on an application scenario corresponding to the destination. For example, if the destination is a bay, a corresponding application scenario is sea, and a corresponding first usage device may include a trolling motor of a fishing boat and a constant temperature fish box.

At S203, the controller determines a predicted power consumption amount of the first usage device based on the weather information.

In using the first usage device, weather and environmental factors may affect the first usage device, thereby affecting the power consumption amount of the first usage device. For example, if the target object is sailing on a fishing boat and encounters headwinds, the power of the fishing boat needs to be increased, thereby affecting the power consumption of the trolling motor.

Specifically, before the current operations, the method further includes the following. In a possible embodiment, the method further includes the following. At least one application scenario corresponding to the destination of the current trip is determined. At least one second application scenario corresponding to the first usage device is determined from the at least one application scenario. Scenario weather information corresponding to the at least one second application scenario is determined from the weather information.

The predicted power consumption amount of the first usage device is determined based on the weather information as follows. The predicted power consumption amount of the first usage device is determined based on the scenario weather information corresponding to the at least one second application scenario.

The destination of the current trip may include multiple application scenarios, but the trip of the target object may not involve every application scenario. In this case, application scenarios involved in the trip of the target object may be further determined based on the usage devices equipped in the RV. For example, if the application scenarios corresponding to the destination are a mountain and a river, and the first usage devices include a trolling motor and a constant temperature fish box, the application scenario involved in the trip of the target object is determined to be river because the first usage devices are used for fishing and sailing.

Meanwhile, the weather information corresponding to the destination is the scenario weather information corresponding to the at least one second application scenario determined based on the first usage device, so that the predicted power consumption amount of the first usage device may be determined through the scenario weather information. For example, if the second application scenario is a river, the scenario weather information may include weather information that affect fishing or sailing, such as wind speed and wind direction on the river surface.

Exemplarily, reference is made to table 1, which is a weather information lookup table provided in the disclosure. It may be seen that different application scenarios correspond to different scenario information. In a case where the weather information corresponding to waters application scenario and mountains application scenario are temperature, humidity, wind speed, wind direction, rainfall, etc., the scenario weather information of the waters application scenario may include weather information that affect fishing or sailing, such as temperature, humidity, wind speed, and wind direction, and the scenario weather information of the mountains application scenario may include weather information that affect the vision thereby affecting climbing, such as temperature, humidity, and rainfall. The table 1 is as follows.

**Table 1**

| Application scenario | Weather information | Non-scenario weather information | Scenario weather information |
|---|---|---|---|
| Waters | Temperature, humidity, wind speed, wind direction, rainfall | Rainfall | Temperature, humidity, wind speed, wind direction |
| Mountains | Temperature, humidity, wind speed, wind direction, rainfall | Wind speed, wind direction | Temperature, humidity, rainfall |
| ...... | ...... | ...... | ...... |

In an embodiment of the disclosure, the scenario weather information corresponding to the at least one second application scenario is determined based on the at least one second application scenario corresponding to the first usage device in the RV, so that the predicted power consumption amount of the first usage device is determined. In this way, the weather information may be closely correlated with the current trip, thereby increasing the accuracy of determining the predicted power consumption amount of the first usage device.

In addition, in a possible embodiment, the trip information further includes an arrival time corresponding to the destination of the current trip, and the method further includes the following. A usage duration of the first usage device is determined based on the arrival time.

The predicted power consumption amount of the first usage device is determined based on the scenario weather information corresponding to the at least one second application scenario as follows. A unit power consumption amount of the first usage device is determined based on the scenario weather information. If there is a single first usage device, the predicted power consumption amount of the first usage device is determined based on the usage duration and the unit power consumption amount.

The predicted power consumption amount of the first usage device may be determined based on the unit power consumption amount and the usage duration of the first device. The unit power consumption amount of the first usage device may be determined based on the scenario weather information, specifically based on both the rated working power of the first usage device and the impact of the scenario weather information on the use of the first usage device. The reason is that the scenario weather information may affect the power consumption of the first usage device. For example, if the first usage device is a trolling motor of a boat, and if the wind direction on the river surface is opposite to the sailing direction of the boat, the trolling motor needs more power to move forward, thereby increasing the power consumption amount.

Since the time that the RV arrives at the destination may affect the duration of the target object using the first usage device, the usage duration of the first usage device may be determined based on the time that the RV arrives at the destination. For example, if the first usage device is a device used for fishing, and if the RV arrives at the destination in the morning, the target object may not concern the usage duration of the first usage device. If the RV arrives at the destination in the afternoon, the target object may concern that it is unsafe due to darkness if the first usage device is used for too long. In this case, the usage duration of the first usage device in a situation where the RV arrives in the evening is shorter than the usage duration of the first usage device in a situation where the RV arrives in the morning. Additionally, predictions mentioned in the disclosure are made based on a prediction model, and the training data for the prediction model may be previous trip data of the RV.

Specifically, the unit power consumption amount of the first usage device and the usage duration of the first usage device may be determined based on empirical values or the prediction model. For example, the empirical values of the unit power consumption amount may refer to the unit power consumption amount of the first usage device generated under scenario weather information corresponding to previous trips. In a case where the first usage device is a trolling motor of a boat, the trolling motor needs to provide driving power for the boat and the rated power of the trolling motor is 40. If there are two pieces of previous trip information, the first previous trip information includes a wind force level of level 4 and a unit power consumption amount of 50, and the second previous trip information includes a wind force level of level 2 and a unit power consumption amount of 45, then it may be determined that the unit power consumption amount increases as the wind force level increases. Based on the aforementioned two wind force levels and corresponding unit power consumption amounts, it may be simply determined that one level of increase in the wind force level corresponds to 2.5 of increase in the unit power consumption amount. Therefore, in a case where the current wind force level is level 3, the unit power consumption amount of the first usage device is determined to be 47.5.

For another example, the empirical values of the usage duration may refer to the arrival time of the first usage device and the usage duration corresponding to the arrival time in previous trips. For example, in a first previous trip, the arrival time of the first usage device is 10 a.m. and the usage duration of the first usage device is 8 hours. In a second previous trip, the arrival time of the first usage device is 2 p.m. and the usage duration of the first usage device is 4 hours. In this case, it may be determined that a later arrival time corresponds to a shorter usage duration of the first usage device. Simply based on the two sets of data mentioned above, the usage duration of the first usage device is determined to be 6 hours if the arrival time is 12 p.m.

In addition, a prediction model for unit power consumption amount may refer to a prediction model determined after being trained based on the unit power consumption amounts of the first usage device and the scenario weather information in previous trips. For example, the training data for the prediction model corresponding to the first usage device may include the unit power consumption amount under the rated power, the actual unit power consumption amount, and the scenario weather information. The scenario weather information may refer to factors that affect the power consumption of a usage device in a current application scenario, such as rainfall, wind speed, temperature, etc. A prediction model for usage duration may refer to a prediction model determined after being trained based on arrival times of the first usage device and corresponding usage durations in previous trips. The above prediction models may be neural network models, linear regression models, etc.

In an embodiment of the disclosure, the usage duration of the first usage device is determined based on the arrival time, and the unit power consumption amount of the first usage device is determined based on the scenario weather information, so that the predicted power consumption amount of the first usage device is determined. In this way, the efficiency of determining the predicted power consumption amount of the first usage device is improved, and the accuracy of determining the predicted power consumption amount of the first usage device is also improved.

Further, in a possible embodiment, the method further includes the following. If there are multiple first usage devices, a second application scenario corresponding to each of the multiple first usage devices is determined. If the multiple first usage devices correspond to multiple second application scenarios and the multiple first usage devices does not include any second usage device corresponding to the multiple second application scenarios, a unit power consumption amount of each of the multiple first usage devices is determined based on the scenario weather information. If the multiple first usage devices correspond to multiple second application scenarios and the multiple first usage devices include a second usage device corresponding to the multiple second application scenarios, the unit power consumption amount of each of the multiple first usage devices is determined based on the scenario weather information, where a unit power consumption amount of the second usage device includes multiple first unit power consumption amounts, and the multiple first unit power consumption amounts correspond to the multiple second application scenarios. A predicted power consumption amount of each first usage device is determined based on the unit power consumption amount and a usage duration of each first usage device.

When there are multiple first usage devices, a predicted power consumption amount corresponding to each first usage device needs to be determined. However, the multiple first usage devices may include the second usage device corresponding to multiple application scenarios. In this case, the predicted power consumption amount of the second usage device includes predicted power consumption amounts respectively corresponding to the multiple application scenarios. The predicted power consumption amount of the second usage device may be calculated as follows. Multiple unit predicted power consumption amounts are determined based on the scenario weather information respectively corresponding to the multiple application scenarios corresponding to the second usage device. Multiple scenario predicted power consumption amounts are determined based on the multiple unit predicted power consumption amounts and the usage duration of the second usage device. The predicted power consumption amount of the second usage device is determined based on the multiple scenario predicted power consumption amounts.

In addition, for the second usage device, during the actual trip, the target object may only use the second usage device in a single application scenario. In order to avoid repeated calculations when calculating the predicted power consumption amount of the second usage device, the application scenario corresponding to the second usage device may be determined based on the application scenario corresponding to a third usage device, where the third usage device is a device in the multiple first usage devices other than the second usage device.

Specifically, the application scenario corresponding to the third usage device is determined, and the application scenario corresponding to the second usage device is determined from the multiple application scenarios corresponding to the second usage device based on the application scenario corresponding to the third usage device. The application scenario corresponding to the second usage device is an application scenario in the multiple application scenarios corresponding to the second usage device, which is the same as the application scenario corresponding to the third usage device. This is because the second usage device is a device that can be used in the multiple application scenarios, which means that the second usage device has relatively weak relevance to each available application scenario. In this case, if there is a usage device in the first usage devices that corresponds to a third application scenario that is the same as any of the multiple application scenarios corresponding to the second usage device, it may be determined that the probability of the target object using the second usage device in the third application scenario during the actual trip is relatively high.

Exemplarily, reference is made to table 2, which is a device and scenario lookup table provided in the disclosure. It may be seen that device 1, device 2, and device 3 are correspond to mountains application scenario, while the device 3 also corresponds to waters application scenario. In this case, it is feasible to calculate a predicted power consumption amount of the device 3 corresponding to the mountains application scenario when calculating the predicted power consumption amount of the device 3. The table 2 is as follows.

**Table 2**

| Usage device | Application scenario |
|---|---|
| Device 1 | Mountains |
| Device 2 | Mountains |
| Device 3 | Mountains, waters |
| ...... | ...... |

In an embodiment of the disclosure, when there are multiple first usage devices and the multiple first usage devices include the second usage device corresponding to the multiple second application scenarios, a predicted power consumption amount of the second usage device corresponding to each second application scenario is respectively determined. In this way, insufficient battery level of the energy storage battery corresponding to the second usage device caused by using the second usage device for multiple times during the trip may be avoided, thereby improving the accuracy of determining the predicted power consumption amount of the second usage device.

At S204, the controller determines a first charging amount of the first energy storage battery corresponding to the first usage device based on the trip information and the predicted power consumption amount of the first usage device.

The first energy storage battery is an energy storage battery in the at least one energy storage battery. The at least one energy storage battery respectively corresponds to one or more usage devices. In the meantime, a single usage device may correspond to one or more energy storage batteries. The first charging amount of the first energy storage battery is determined to ensure that the first usage device has sufficient battery level.

The current operation will be described in detail in the following.

Specifically, in a possible embodiment, the trip information further includes a trip duration of the current trip. Based on the predicted power consumption amount of the first usage device, the first charging amount of the first energy storage battery corresponding to the first usage device is determined as follows. A second charging amount of the first energy storage battery is determined based on the trip duration, a charging power of the vehicle-mounted charger, and a first battery level of the first energy storage battery, where the first battery level includes a remaining battery level and a battery capacity. If a second battery level is determined to be no less than the predicted power consumption amount of the first usage device, the second charging amount is determined as the first charging amount, where the second battery level is a sum of the second charging amount and the remaining battery level of the first energy storage battery.

If the second battery level is determined to be less than the predicted power consumption amount of the first usage device, whether a second energy storage battery exists in other energy storage batteries is determined. The other energy storage batteries are energy storage batteries other than the first energy storage battery in the at least one energy storage battery. A third battery level of the second energy storage battery is no less than the predicted energy consumption amount of the first usage device. The third battery level is a sum of a third charging amount and a remaining battery level of the second energy storage battery, and the third charging amount is determined based on the trip duration, the charging power of the vehicle-mounted charger, and the first battery level of the second energy storage battery.

If there is the second energy storage battery in the other energy storage batteries, the second energy storage battery is determined as a new first energy storage battery, and the third charging amount is determined as a first charging amount of the new first energy storage battery. If there is no second energy storage battery in the other energy storage batteries, a third energy storage battery in the other energy storage batteries in combination with the first energy storage battery is determined as a new first energy storage battery, to make a second battery level of the new first energy storage battery no less than the predicted power consumption amount of the first usage device, and a second charging amount of the new first energy storage battery is determined as a first charging amount of the new first energy storage battery.

The second charging amount is the maximum charging amount determined based on the current trip duration, the charging power of the vehicle-mounted charger, and the first battery level of the first energy storage battery. In a case where the sum of the second charging amount and the remaining battery level of the first energy storage battery is no less than the predicted power consumption amount of the first usage device, the second charging amount may be directly determined as the first charging amount of the first energy storage battery. In a case where the sum of the second charging amount and the remaining battery level of the first energy storage battery is less than the predicted power consumption amount of the first usage device, even if the second charging amount is determined as the first charging amount of the first energy storage battery, the first energy storage battery is unable to meet the power demand of the first usage device. At this point, consideration may be given to determination of a new first energy storage battery from the at least one energy storage battery, so that the new first energy storage battery after charging satisfies the power demand of the first usage device.

First of all, whether the second energy storage battery in the at least one energy storage battery can replace the first energy storage battery to supply power for the first usage device may be determined. In this case, the third charging amount of the second energy storage battery needs to be determined based on the trip duration, the charging power of the vehicle-mounted charger, and the first battery level of the second energy storage battery, and whether the sum of the third charging amount and the remaining battery level of the second energy storage battery is no less than the predicted power consumption amount of the first usage device needs to be determined. In a case where the sum of the third charging amount and the remaining battery level of the second energy storage battery is no less than the predicted power consumption amount of the first usage device, the second energy storage battery is determined as the new first energy storage battery, and the third charging amount is determined as the first charging amount of the new first energy storage battery.

In addition, the case may be that the first energy storage battery is replaced by the third energy storage battery in the at least one energy storage battery in combination with the first energy storage battery, to supply power for the first usage device. Further, a condition where the sum of the second charging amount and the remaining battery level of the new first energy storage battery is no less than the predicted power consumption amount of the first usage device needs to be satisfied. Under a situation where the above condition is satisfied, the second charging amount of the new first energy storage battery is determined as the first charging amount of the new first energy storage battery. Since there are multiple first energy storage batteries under the current situation, the number of energy storage batteries that can be charged at the same time needs to be considered when calculating the second charging amount.

In an embodiment of the disclosure, the first charging amount of the first energy storage battery is determined based on a chargeable capacity of the first energy storage battery and the predicted power consumption amount of the first usage device. In this way, a situation where the first energy storage device is unable to meet the power demand of the first usage device due to charging issues may be avoided.

In addition, the determination of the second charging amount will be described in detail in the following.

Specifically, in a possible embodiment, the second charging amount of the first energy storage battery is determined based on the trip duration, the charging power of the vehicle-mounted charger, and the first battery level of the first energy storage battery as follows. A fourth charging amount of the first energy storage battery is determined based on the trip duration and the charging power of the vehicle-mounted charger. If the fourth charging amount is determined to be greater than a first difference, the first difference is determined as the second charging amount, where the first difference is a difference between the battery capacity and the remaining battery level of the first energy storage battery. If the fourth charging amount is determined to be not greater than the first difference, the fourth charging amount is determined as the second charging amount.

The fourth charging amount is the maximum charging amount of the first energy storage battery that the first energy storage battery can be charged without considering the battery capacity and the remaining battery level of the first energy storage battery. In a case where the fourth charging amount is greater than the difference between the battery capacity and the remaining battery level of the first energy storage battery, the first energy storage battery is unable to be charged with the fourth charging amount. At this point, the difference between the battery capacity and the remaining battery level of the first energy storage battery is determined as the second charging amount of the first energy storage battery. In a case where the fourth charging amount is not greater than the difference between the battery capacity and the remaining battery level of the first energy storage battery, the first energy storage battery is able to be charged with the fourth charging amount. At this point, the fourth charging amount is determined as the second charging amount of the first energy storage battery.

In an embodiment of the disclosure, the second charging amount is determined by comparing the fourth charging amount and the first difference, thereby improving the accuracy of determining the second charging amount.

Exemplarily, reference is made to FIG. 3, which is a schematic structural view of an energy storage battery provided in an embodiment of the disclosure. As illustrated in FIG. 3, the energy storage battery includes a first cell 400 and a second cell 410. The first cell 400 has a chargeable capacity 401 corresponding to the first difference. In a case where the battery capacity of the first cell 400 is the same as the battery capacity of the second cell 410, since a remaining battery level 402 of the first cell 400 is less than a remaining battery level 411 of the second cell 410, if a second battery level corresponding to the first cell 400 is less than the predicted power consumption amount of a usage device corresponding to the first cell 400, whether a second battery level corresponding to the second cell 410 is less than the predicted power consumption amount of the usage device corresponding to the first cell 400 may be determined.

At S205, the controller controls the vehicle-mounted charger to charge the first energy storage battery based on the first charging amount corresponding to the first energy storage battery.

There may be a single first energy storage battery or multiple first energy storage batteries. When the first energy storage battery is charged by the vehicle-mounted charger, the number of energy storage batteries that can be charged at the same time needs to be determined based on the number of charging channels of the vehicle-mounted charger.

In addition, in a possible embodiment, based on the first charging amount corresponding to the first energy storage battery, the vehicle-mounted charger is controlled to charge the first energy storage battery as follows. If there are multiple destinations, the vehicle-mounted charger is controlled to charge a fourth energy storage battery based on a first charging amount corresponding to the fourth energy storage battery. When the charging of the fourth energy storage battery is completed, the vehicle-mounted charger is controlled to charge a fifth energy storage battery based on a first charging amount corresponding to the fifth energy storage battery, where the fifth energy storage battery corresponds to a second destination, an arrival time corresponding to the first destination is earlier than an arrival time corresponding to the second destination, and the fourth energy storage battery and the fifth energy storage battery constitute the first energy storage battery.

In a case where there are multiple destinations, there are multiple first usage devices, resulting in that there may be multiple first energy storage batteries corresponding to the multiple first usage devices. In this case, if the multiple first energy storage batteries are unable to be charged at the same time, consideration needs to be given to a charging sequence for the multiple first energy storage batteries. Therefore, in the disclosure, consideration is given to a sequence of arrival time corresponding to each of the multiple destinations. A fourth energy storage device corresponding to a destination with an earlier arrival time is charged first, and then a fifth energy storage battery corresponding to a destination with a later arrival time is charged after the charging of the fourth energy storage battery is completed. Further, while considering the charging sequence, the number of charging channels of the vehicle-mounted charger also needs to be taken into account, and the number of energy storage batteries that can be charged at the same time is determined based on the number of charging channels.

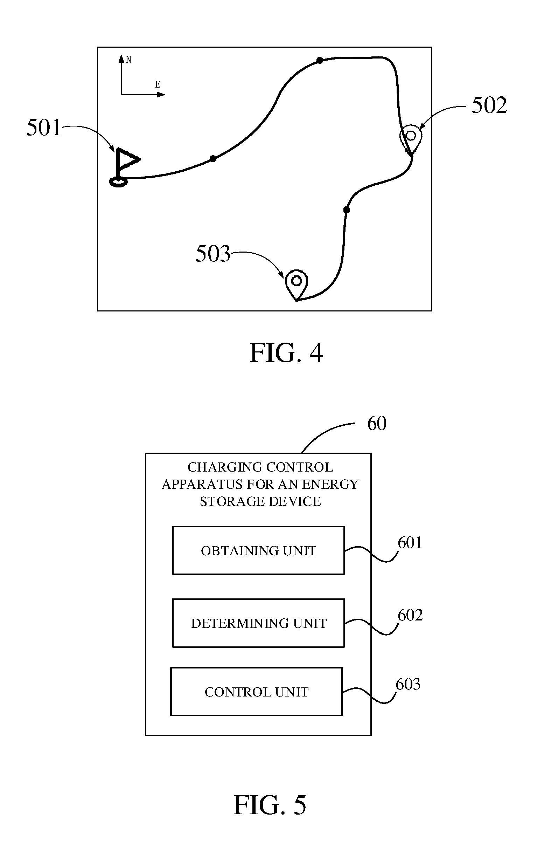

Exemplarily, reference is made to FIG. 4, which is a schematic structural view of a trip route provided in an embodiment of the disclosure. As illustrated in FIG. 4, a trip route diagram is included, where the trip route diagram includes one starting point and two destinations, for example, a starting point 501, a first destination 502, and a second destination 503. Starting from the starting point 501, a sequence of arrival time corresponding to the first destination 502 and the second destination 503 may be seen from the trip route diagram.

In an embodiment of the disclosure, in a case where there are multiple destinations, priority of charging will be given to an energy storage device used at a destination corresponding to an earlier arrival time, which ensures that the energy storage battery that is firstly used meets the power supply demand, thereby improving the overall charging efficiency of the energy storage batteries.

Exemplarily, if the destination of the current trip is determined based on the trip information to be a certain beach, corresponding application scenarios of the destination may be determined to include the waters and the sand. In the RV, if a device used in the trip corresponding to the beach only includes a fishing device (for example, a constant temperature fish box, a trolling motor), then a second application scenario corresponding to the destination of the trip is determined to be the waters, and the first usage device is the fishing device. At this point, based on that the destination of the trip is the waters, the scenario weather information related to the waters in the current destination is determined to include temperature, humidity, wind speed, and the like. The arrival time is determined based on the current trip, and the usage duration corresponding to the first usage device is determined based on the current arrival time. The unit power consumption amount of the first usage device is determined based on the scenario weather information and the rated power of the first usage device. The usage duration corresponding to the first usage device and the unit power consumption amount of the first usage device may be determined based on empirical values or the prediction model.

The predicted power consumption amount of the first usage device is determined based on the usage duration and the unit power consumption amount corresponding to the first usage device. The first charging amount of the first energy storage battery corresponding to the first usage device is determined based on the trip information and the predicted power consumption amount of the first usage device. The RV control system charges the first energy storage battery based on the first charging amount corresponding to the first energy storage battery. This not only ensures that the use of the first usage device by the user will not be affected by insufficient battery level, but also reasonably allocates the energy storage batteries in the RV control system, thereby improving the allocation efficiency and the energy utilization rate of the energy storage capacity of the control system.

It may be seen that, in embodiments of the disclosure, a corresponding first usage device is determined based on the destination of the current trip in the trip information, and the predicted power consumption amount of the first usage device is determined based on the weather information of the trip information. The first charging amount of the first energy storage battery corresponding to the first usage device is determined based on the trip information and the predicted power consumption amount of the first usage device. Finally, the vehicle-mounted charger is controlled to charge the first energy storage battery based on the first charging amount of the first energy storage battery. In this way, for a device that may be used in the RV, a required charging amount may be determined through the trip information, and an energy storage battery corresponding to the device that may be used in the RV is automatically charged with the required charging amount. This not only ensures that the use of the first usage device by the user will not be affected by insufficient battery level, but also improves the allocation efficiency of the energy storage capacity of the control system, thereby improving the energy utilization rate of the energy storage capacity and making the control system more intelligent in charging the energy storage battery.

Similar to the embodiments described above, reference is made to FIG. 5, which is a block diagram of functional units of a charging control apparatus for an energy storage device provided in an embodiment of the disclosure. The apparatus is applicable to the above controller. As illustrated in FIG. 5, a charging control apparatus 60 for an energy storage device includes an obtaining unit 601, a determining unit 602, and a control unit 603. The obtaining unit 610 is configured to obtain trip information, where the trip information comprises a destination and weather information of a current trip. The determining unit 602 is configured to determine a first usage device corresponding to the destination of the current trip. The determining unit 602 is further configured to determine a predicted power consumption amount of the first usage device based on the weather information. The determining unit 602 is further configured to determine, based on the trip information and the predicted power consumption amount of the first usage device, a first charging amount of a first energy storage battery corresponding to the first usage device, where the first energy storage battery is an energy storage battery in the at least one energy storage battery. The control unit 603 is configured to control, based on the first charging amount corresponding to the first energy storage battery, the vehicle-mounted charger to charge the first energy storage battery.

In a possible embodiment, the determining unit 602 is further configured to: determine at least one application scenario corresponding to the destination of the current trip; determine at least one second application scenario corresponding to the first usage device from the at least one application scenario; determine scenario weather information corresponding to the at least one second application scenario from the weather information; and in terms of determining the predicted power consumption amount of the first usage device based on the weather information, the determining unit 602 is further configured to: determine the predicted power consumption amount of the first usage device based on the scenario weather information corresponding to the at least one second application scenario.

In a possible embodiment, the trip information further includes an arrival time corresponding to the destination of the current trip. The determining unit 602 is further configured to: determine a usage duration of the first usage device based on the arrival time. In terms of determining the predicted power consumption amount of the first usage device based on the scenario weather information corresponding to the at least one second application scenario, the determining unit 602 is further configured to: determine a unit power consumption amount of the first usage device based on the scenario weather information; and if there is a single first usage device, determine the predicted power consumption amount of the first usage device based on the usage duration and the unit power consumption amount.

In a possible embodiment, the determining unit 602 is further configured to: if there are multiple first usage devices, determine a second application scenario corresponding to each of the multiple first usage devices; if the multiple first usage devices correspond to multiple second application scenarios and the multiple first usage devices not include any second usage device corresponding to multiple second application scenarios, determine a unit power consumption amount of each of the multiple first usage devices based on the scenario weather information; if the multiple first usage devices correspond to multiple second application scenarios and the multiple first usage devices include a second usage device corresponding to multiple second application scenarios, determine the unit power consumption amount of each of the multiple first usage devices based on the scenario weather information, where a unit power consumption amount of the second usage device includes multiple first unit power consumption amounts, and the multiple first unit power consumption amounts correspond to the multiple second application scenarios; determine a predicted power consumption amount of each first usage device based on the unit power consumption amount and a usage duration of each first usage device.

In a possible embodiment, the trip information further includes a trip duration of the current trip. In terms of determining, based on the predicted power consumption amount of the first usage device, the first charging amount of the first energy storage battery corresponding to the first usage device, the determining unit 602 is specifically configured to: determine a second charging amount of the first energy storage battery based on the trip duration, a charging power of the vehicle-mounted charger, and a first battery level of the first energy storage battery, where the first battery level includes a remaining battery level and a battery capacity; if a second battery level is determined to be no less than the predicted power consumption amount of the first usage device, determine the second charging amount as the first charging amount, where the second battery level is a sum of the second charging amount and the remaining battery level of the first energy storage battery.

The determining unit 602 is specifically configured to: if the second battery level is determined to be less than the predicted power consumption amount of the first usage device, determine whether a second energy storage battery exists in other energy storage batteries; the other energy storage batteries are energy storage batteries other than the first energy storage battery in the at least one energy storage battery; a third battery level of the second energy storage battery is no less than the predicted energy consumption amount of the first usage device, the third battery level is a sum of a third charging amount and a remaining battery level of the second energy storage battery, and the third charging amount is determined based on the trip duration, the charging power of the vehicle-mounted charger, and the first battery level of the second energy storage battery.

The determining unit 602 is specifically configured to: if there is the second energy storage battery in the other energy storage batteries, determine the second energy storage battery as a new first energy storage battery, and determine the third charging amount as a first charging amount of the new first energy storage battery; if there is no second energy storage battery in the other energy storage batteries, determine a third energy storage battery in the other energy storage batteries in combination with the first energy storage battery as a new first energy storage battery, to make a second battery level of the new first energy storage battery no less than the predicted power consumption amount of the first usage device, and determine a second charging amount of the new first energy storage battery as a first charging amount of the new first energy storage battery.

In a possible embodiment, in terms of determining the second charging amount of the first energy storage battery based on the trip duration, the charging power of the vehicle-mounted charger, and the first battery level of the first energy storage battery, the determining unit 602 is specifically configured to: determine a fourth charging amount of the first energy storage battery based on the trip duration and the charging power of the vehicle-mounted charger; if the fourth charging amount is determined to be greater than a first difference, determine the first difference as the second charging amount, where the first difference is a difference between the battery capacity and the remaining battery level of the first energy storage battery; if the fourth charging amount is determined to be not greater than the first difference, determine the fourth charging amount as the second charging amount.

In a possible embodiment, in terms of controlling, based on the first charging amount corresponding to the first energy storage battery, the vehicle-mounted charger to charge the first energy storage battery, the control unit 603 is specifically configured to: if there are multiple destinations, control, based on a first charging amount corresponding to a fourth energy storage battery, the vehicle-mounted charger to charge the fourth energy storage battery, where the fourth energy storage battery corresponds to a first destination; when the charging of the fourth energy storage battery is completed, control, based on a first charging amount corresponding to a fifth energy storage battery, the vehicle-mounted charger to charge the fifth energy storage battery, where the fifth energy storage battery corresponds to a second destination, an arrival time corresponding to the first destination is earlier than an arrival time corresponding to the second destination, and the fourth energy storage battery and the fifth energy storage battery constitute the first energy storage battery.

It may be understood that, since method embodiments and apparatus embodiments are different presentation forms of the same technical concept, the content of the method embodiments of the disclosure should be synchronized to the apparatus embodiments, which will not be repeated herein.

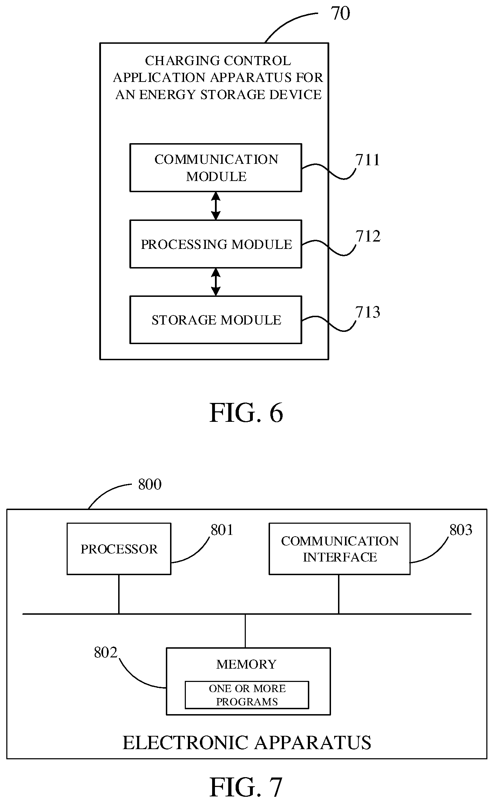

In a case where an integrated unit is used, as illustrated in FIG. 6, which is a block diagram of functional units of a charging control application apparatus for an energy storage device provided in an embodiment of the disclosure, a charging control application apparatus 70 for an energy storage device includes a processing module 712 and a communication module 711. The processing module 712 is configured to control and manage an action of the charging control application apparatus 70 for an energy storage device. For example, the processing module 712 is configured to execute operations of the obtaining unit 601, the determining unit 602, and the control unit 603, and/or configured to execute other processes of the technology described in this specification. The communication module 711 is configured to support an interaction between the charging control application apparatus 70 for an energy storage device and other devices. As illustrated in FIG. 6, the charging control application apparatus 70 for an energy storage device further includes a storage module 713, and the storage module 713 is configured to store program codes and data of the charging control application apparatus 70 for an energy storage device.

The processing module 712 may be a processor or controller, for example, may be a central processing unit (CPU), a general-purpose processor, a digital signal processor (DSP), an application-specific integrated circuit (ASIC), a field-programmable gate array (FPGA) or another programmable logic device, a transistor logic device, a hardware component, or any combination thereof. The processing unit 712 may implement or execute various example logical blocks, modules, and circuits described with reference to content disclosed in the present disclosure. Alternatively, the processor may be a combination of processors implementing a computing function, for example, a combination of one or more microprocessors, or a combination of a DSP and a microprocessor. The communication module 711 may be a transceiver, a radio frequency (RF) circuit, a communication interface, or the like. The storage module 713 may be a memory.

All related content of each scenario in the above-mentioned method embodiments may be cited in function descriptions of a corresponding function module, which will not be elaborated herein. The above-mentioned charging control application apparatus 70 for an energy storage device can execute the charging control method for an energy storage device as illustrated in FIG. 2.

All or some of the foregoing embodiments may be implemented by using software, hardware, firmware, or any combination thereof. When a software program is used to implement the embodiments, the embodiments may be implemented completely or partially in a form of a computer program product. The computer program product includes one or more computer instructions. When the computer program instructions are loaded or executed on a computer, the procedures or functions according to the embodiments of this application are completely or partially generated. The computer may be a general-purpose computer, a dedicated computer, a computer network, or another programmable apparatus. The computer instructions may be stored in a computer readable storage medium or may be transmitted from a computer readable storage medium to another computer readable storage medium. For example, the computer instructions may be transmitted from a website, computer, server, or data center to another website, computer, server, or data center in a wired (for example, a coaxial cable, an optical fiber, or a DSL) or wireless (for example, infrared, radio, or microwave) manner. The computer readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a SSD), or the like.

FIG. 7 is a block diagram of an electronic apparatus provided in an embodiment of the disclosure. As illustrated in FIG. 7, an electronic apparatus 800 may include one or more components as follows: a processor 801, a memory 802, and a communication interface 803. The processor 801, the memory 802, and the communication interface 803 are interconnected and perform communication with each other. The memory 802 may store one or more computer programs, and the one or more computer programs may be configured to, when executed by one or more processor 801, implement the methods described in the above embodiments.

The processor 801 may include one or more processing cores. The processor 801 connects various parts within the electronic apparatus 800 through various interfaces and lines, for performing various functions of the electronic apparatus 800 and processing data by running or executing at least one instruction stored in the memory 802, and by calling data stored in the memory 802. Optionally, the processor 801 may be implemented with at least one of the following hardware forms: a DSP, an FPGA, a programmable logic array (PLA). The processor 801 may integrate one or a combination of some of a CPU, a graphics processing unit (GPU), a neural-network processing unit (NPU), and a modem. It is to be understood that the modem may be implemented by a separate chip without being integrated into the processor 801.

The memory 802 may include a random access memory (RAM) and read-only memory (ROM). The memory 802 may be configured to store an instruction, a program, a code, a code set, or an instruction set. The memory 802 may include a program storage area and a data storage area, where the program storage area may store an instruction for realizing an operating system, an instruction for realizing at least one function (such as a touch function, a sound playing function, an image playing function), an instruction for realizing the above-mentioned various method embodiments. The data storage area may also store data created by the electronic apparatus 800 in use.

It is to be understand that the structure of the electronic apparatus 800 may include more or fewer components than illustrated in the above structural diagram. For example, the electronic apparatus 800 may include a power module, a physical button, a WiFi (Wireless Fidelity) module, a speaker, a Bluetooth module, a sensor, and other components, which will not be limited herein.

The above electronic apparatus 800 may be the controller of the RV control system 100 or a part of the controller of the RV control system 100.

An embodiment of the disclosure provides a computer-readable storage medium. The computer-readable storage medium stores program data which, when executed by a processor, implements part or all of the operations of any one of the charging control methods for an energy storage device described in the above method embodiments.

An embodiment of the disclosure further provides a computer program product, where the computer program product includes a non-transitory computer readable storage medium storing a computer program, and the computer program is operated to cause a computer to execute part or all of the operations of any one of the charging control methods for an energy storage device described in the above method embodiments. The computer program product may be a software installation package.

It is to be noted that, the method embodiments of any one of the above charging control method for an energy storage device, for the sake of conciseness, are all described as a series of action combinations, but those skilled in the art should know that the present disclosure is not limited by the described order of action since some operations may be performed in a different order or simultaneously according to the present disclosure. Secondly, those skilled in the art should also understand that the embodiments described in the specification are all exemplary embodiments, and the actions and units involved are not necessarily required in the disclosure.

Although the disclosure is described with reference to the embodiments, in a process of implementing the disclosure that claims protection, a person skilled in the art may understand and implement another variation of the disclosed embodiments by viewing the accompanying drawings, disclosed content, and the accompanying claims. In the claims, "comprising" does not exclude another component or another step, and "a" or "one" does not exclude a case of multiple. Some measures are recorded in dependent claims that are different from each other, but this does not mean that these measures cannot be combined to produce a better effect.

Those of ordinary skill in the art may understand that all or a part of the operations of the methods in the method embodiments of any one of the charging control methods for an energy storage device may be implemented by a program instructing related hardware. The program may be stored in a computer readable storage. The storage may include: a flash disk, a ROM, a RAM, a magnetic disk, or an optical disk.

Embodiments of the disclosure are described above in detail. Specific embodiments are used in this specification to describe the principle and implementation manners of the charging control method for an energy storage device and related apparatus. The foregoing embodiments are merely intended to help understand the method and core idea of the present invention. In addition, with respect to the implementation manners and the application scope, modifications may be made by a person of ordinary skill in the art according to the idea of the charging control method for an energy storage device and related apparatus. Therefore, the specification shall not be construed as a limitation on the present disclosure.

The present disclosure is described with reference to the flowcharts and/or block diagrams of the method, the hardware products, and the computer program product according to the embodiments of the present disclosure. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

It may be understood that, any product that is controlled or configured for executing the processing method of the flow chart described in the method embodiment of the charging control method for an energy storage device, such as the terminal and computer program product of the above flow chart, belongs to the category of related products described in the present disclosure.

Obviously, those skilled in the art can make various modifications and variations to the charging control method for an energy storage device and related apparatus provided in the disclosure without departing from the spirit and scope of the disclosure. The disclosure is intended to cover these modifications and variations of the disclosure provided that they fall within the scope of protection defined by the following claims and their equivalent technologies.

## Claims

1. A charging control method for an energy storage device, wherein the method is applicable to a controller in a recreational vehicle (RV) control system, the RV control system further comprises a vehicle-mounted charger and at least one energy storage battery, and the method comprises:
obtaining trip information, wherein the trip information comprises a destination and weather information of a current trip;
determining a first usage device corresponding to the destination of the current trip;
determining a predicted power consumption amount of the first usage device based on the weather information;
determining, based on the trip information and the predicted power consumption amount of the first usage device, a first charging amount of a first energy storage battery corresponding to the first usage device, wherein the first energy storage battery is an energy storage battery in the at least one energy storage battery; and
controlling, based on the first charging amount corresponding to the first energy storage battery, the vehicle-mounted charger to charge the first energy storage battery.

2. The method of claim 1, further comprising:
determining at least one application scenario corresponding to the destination of the current trip;
determining at least one second application scenario corresponding to the first usage device from the at least one application scenario;
determining scenario weather information corresponding to the at least one second application scenario from the weather information; and
wherein determining the predicted power consumption amount of the first usage device based on the weather information comprises:
determining the predicted power consumption amount of the first usage device based on the scenario weather information corresponding to the at least one second application scenario.

3. The method of claim 2, wherein the trip information further comprises an arrival time corresponding to the destination of the current trip, and the method further comprises:
determining a usage duration of the first usage device based on the arrival time;
and wherein determining the predicted power consumption amount of the first usage device based on the scenario weather information corresponding to the at least one second application scenario comprises:
determining a unit power consumption amount of the first usage device based on the scenario weather information; and
in response to the first usage device being a single first usage device, determining the predicted power consumption amount of the first usage device based on the usage duration and the unit power consumption amount.

4. The method of claim 3, further comprising:
in response to the first usage device being a plurality of first usage devices, determining a second application scenario corresponding to each of the plurality of first usage devices;
in response to the plurality of first usage devices corresponding to a plurality of second application scenarios and the plurality of first usage devices not comprising any second usage device corresponding to a plurality of second application scenarios, determining a unit power consumption amount of each of the plurality of first usage devices based on the scenario weather information;
in response to the plurality of first usage devices corresponding to a plurality of second application scenarios and the plurality of first usage devices comprising a second usage device corresponding to a plurality of second application scenarios, determining the unit power consumption amount of each of the plurality of first usage devices based on the scenario weather information, wherein a unit power consumption amount of the second usage device comprises a plurality of first unit power consumption amounts, and the plurality of first unit power consumption amounts correspond to the plurality of second application scenarios; and
determining a predicted power consumption amount of each first usage device based on the unit power consumption amount and a usage duration of each first usage device.

5. The method of any one of claims 1-4, wherein the trip information further comprises a trip duration of the current trip, and wherein determining, based on the predicted power consumption amount of the first usage device, the first charging amount of the first energy storage battery corresponding to the first usage device comprises:
determining a second charging amount of the first energy storage battery based on the trip duration, a charging power of the vehicle-mounted charger, and a first battery level of the first energy storage battery, wherein the first battery level comprises a remaining battery level and a battery capacity;
in response to determining that a second battery level is no less than the predicted power consumption amount of the first usage device, determining the second charging amount as the first charging amount, wherein the second battery level is a sum of the second charging amount and the remaining battery level of the first energy storage battery;
in response to determining that the second battery level is less than the predicted power consumption amount of the first usage device, determining whether a second energy storage battery exists in other energy storage batteries; wherein the other energy storage batteries are energy storage batteries other than the first energy storage battery in the at least one energy storage battery; a third battery level of the second energy storage battery is no less than the predicted energy consumption amount of the first usage device, the third battery level is a sum of a third charging amount and a remaining battery level of the second energy storage battery, and the third charging amount is determined based on the trip duration, the charging power of the vehicle-mounted charger, and the first battery level of the second energy storage battery;
in response to determining presence of the second energy storage battery in the other energy storage batteries, determining the second energy storage battery as a new first energy storage battery, and determining the third charging amount as a first charging amount of the new first energy storage battery; and
in response to determining absence of the second energy storage battery in the other energy storage batteries, determining a third energy storage battery in the other energy storage batteries in combination with the first energy storage battery as a new first energy storage battery, to make a second battery level of the new first energy storage battery no less than the predicted power consumption amount of the first usage device, and determining a second charging amount of the new first energy storage battery as a first charging amount of the new first energy storage battery.

6. The method of claim 5, wherein determining the second charging amount of the first energy storage battery based on the trip duration, the charging power of the vehicle-mounted charger, and the first battery level of the first energy storage battery comprises:
determining a fourth charging amount of the first energy storage battery based on the trip duration and the charging power of the vehicle-mounted charger;
in response to determining that the fourth charging amount is greater than a first difference, determining the first difference as the second charging amount, wherein the first difference is a difference between the battery capacity and the remaining battery level of the first energy storage battery; and
in response to determining that the fourth charging amount is not greater than the first difference, determining the fourth charging amount as the second charging amount.

7. The method of any one of claims 1-4, wherein controlling, based on the first charging amount corresponding to the first energy storage battery, the vehicle-mounted charger to charge the first energy storage battery comprises:
in response to the destination being a plurality of destinations, controlling, based on a first charging amount corresponding to a fourth energy storage battery, the vehicle-mounted charger to charge the fourth energy storage battery, wherein the fourth energy storage battery corresponds to a first destination; and
in response to charging of the fourth energy storage battery being completed, controlling, based on a first charging amount corresponding to a fifth energy storage battery, the vehicle-mounted charger to charge the fifth energy storage battery, wherein the fifth energy storage battery corresponds to a second destination, an arrival time corresponding to the first destination is earlier than an arrival time corresponding to the second destination, and the fourth energy storage battery and the fifth energy storage battery constitute the first energy storage battery.

8. A charging control apparatus for an energy storage device, wherein the apparatus is applicable to a controller in a recreational vehicle (RV) control system, the RV control system further comprises a vehicle-mounted charger and at least one energy storage battery, and the apparatus comprises:
an obtaining unit configured to obtain trip information, wherein the trip information comprises a destination and weather information of a current trip;
a determining unit configured to determine a first usage device corresponding to the destination of the current trip;
the determining unit being further configured to determine a predicted power consumption amount of the first usage device based on the weather information;
the determining unit being further configured to determine, based on the trip information and the predicted power consumption amount of the first usage device, a first charging amount of a first energy storage battery corresponding to the first usage device, wherein the first energy storage battery is an energy storage battery in the at least one energy storage battery; and
a control unit configured to control, based on the first charging amount corresponding to the first energy storage battery, the vehicle-mounted charger to charge the first energy storage battery.

9. An electronic device, comprising a processor, a memory, and a communication interface, wherein the processor, the memory, and the communication interface are connected to one another to perform communication between one another;
the memory is configured to store executable program codes, and the communication interface is configured for wireless communication; and
the processor is configured to invoke the executable program codes stored in the memory to execute the method of any one of claims 1-7.

10. A computer-readable storage medium, storing a computer program used for electronic data interchange (EDI), wherein the computer program, when executed, causes a computer to execute the method of any one of claims 1-7.
